(19) **Europäisches Patentamt**
**European Patent Office**
**Office européen des brevets**

(11) **EP 2 674 809 B1**

(12) **EUROPEAN PATENT SPECIFICATION**

(45) Date of publication and mention
of the grant of the patent:
**12.07.2017   Bulletin 2017/28**

(51) Int Cl.:
***G02F 1/1362*** (2006.01)

(21) Application number: **12189420.8**

(22) Date of filing: **22.10.2012**

(54) **Liquid crystal display panel**

Flüssigkristallanzeigetafel

Panneau d'affichage à cristaux liquides

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2012   CN 201210193317**

(43) Date of publication of application:
**18.12.2013   Bulletin 2013/51**

(73) Proprietor: **HannStar Display Corp.
Wugu Dist. New Taipei City 248 (TW)**

(72) Inventors:
• **Yu, Chia-Hua
248 New Taipei City (TW)**

• **Lin, Sung-Chun
248 New Taipei City (TW)**
• **Liu, Hsuan-Chen
248 New Taipei City (TW)**

(74) Representative: **Viering, Jentschura & Partner
mbB
Patent- und Rechtsanwälte
Kennedydamm 55 / Roßstrasse
40476 Düsseldorf (DE)**

(56) References cited:
**EP-A1- 0 556 484        US-A1- 2009 059 110
US-A1- 2009 141 228**

## Description

## BACKGROUND

## Technical Field

The present invention relates to a liquid crystal display (LCD) technology, and in particular, to an LCD panel and a pixel array substrate thereof.

## Related Art

In recent years, flat-panel displays are developing more and more rapidly, and have gradually taken the place of conventional cathode-ray tube displays. Currently, the flat-panel displays are classified into the following types: an organic light-emitting diodes display (OLED), a plasma display panel (PDP), an LCD, and a field emission display (FED), and so on. The LCD technology can be classified into two modes according to the twisting manners of a liquid crystal molecular material. One is a twisted nematic LCD (TN-LCD), and the other is an in-plane switching LCD (IPS-LCD). In the TN-LCD, liquid crystal molecules of the LCD panel are twisted as a longitudinal electric field between two glass substrates changes. In the TN-LCD, common electrodes and pixel electrodes are respectively disposed on a color filter substrate and a pixel array substrate. In comparison, in the IPS-LCD, the common electrodes and the pixel electrodes are fabricated on the pixel array substrate at the same time to provide a transverse electric field, so that the liquid crystal molecules can rotate as the transverse electric field changes.

With the development of high-luminance and high-resolution products, technologies such as high aperture ratio (HAR) and color filter on array (COA) are widely applied in the LCD. However, driven by various smart phone operation systems (OSs), such as Mac OS, Android, and Window Mango, higher resolution of the display is required. Once a portable product with a small sized panel (for example, 5.3-inch, 5-inch, 4.7-inch, 4.3-inch) is required to have high resolution, the aperture ratio of the pixel is relatively sacrificed when the resolution is increased. Consequently, in the LCD technology, HAR designs still require incessant development.

EP0556484 discloses an LCD device having a lattice shaped transparent conductor which forms a storage capacitor with each pixel electrode on the active matrix substrate.

## SUMMARY

In some embodiments, a pixel array substrate includes a first substrate, a plurality of gate lines, a plurality of data lines, a plurality of thin film transistors, a first insulation layer, a transparent conductive layer, a second insulation layer, a plurality of contact holes and a plurality of pixel electrodes. The gate lines and the data lines are disposed on the first substrate. The gate lines and the data lines are interlaced, and a plurality of pixel areas is defined between the gate lines and the data lines. The thin film transistors are respectively disposed corresponding to the pixel areas. A first terminal of each thin film transistor is coupled to one of the gate lines, and a second terminal of each thin film transistor is coupled to one of the data lines. The first insulation layer covers the data lines, the gate lines, the pixel areas and the thin film transistors. The transparent conductive layer covers the first insulation layer, and has a common voltage level. The contact holes are respectively corresponding to the thin film transistors, and penetrate the second insulation layer, the transparent conductive layer, and the first insulation layer. An end of each contact hole is coupled to a third terminal of the corresponding thin film transistor. The pixel electrodes are respectively corresponding to the pixel areas and disposed on the second insulation layer. Each pixel electrode is coupled electrically to the third terminal of the corresponding thin film transistor through the corresponding contact hole. The second insulation layer is disposed between the transparent conductive layer and the pixel electrodes, and insulates the transparent conductive layer from the pixel electrodes.

In some embodiments, the transparent conductive layer is disposed between the first insulation layer and the second insulation layer.

In some embodiments, the transparent conductive layer may be a layer of transparent conductive material having contact holes. In some embodiments, the contact holes are all through vias formed in the layer of transparent conductive material.

In some embodiments, the opening may be configured corresponding to the thin film transistor, the gate line, or a combination thereof.

In some embodiments, an overlapping area between the transparent conductive layer and each pixel electrode is less than or equal to two thirds of the overlapped pixel electrode.

In some embodiments, transparent conductive layer may include a plurality of material blocks. These material blocks are spaced from each other, and each material block extends to cover at least two pixel areas.

Transparent conductive layer may further include a plurality of electric connectors, and each electric connector electrically connects two adjacent material blocks.

In some embodiments, each material block extends to cover all pixel areas disposed on the same straight line.

In some embodiments, each contact hole may further include a first through hole and a second through hole. The first through hole penetrates the transparent conductive layer, the second through hole penetrates the first insulation layer, and the second insulation layer covers a side wall of the transparent conductive layer in the first through hole.

In some embodiments, the transparent conductive layer may comprehensively cover the data lines, the gate lines, the pixel areas and the thin film transistors except areas overlapped with the first through holes of the contact holes.

In some embodiments, the LCD panel includes the foregoing pixel array substrate, a color filter substrate and a liquid crystal layer. The color filter substrate corresponds to the pixel array substrate and is spaced from the pixel array substrate. The liquid crystal layer is disposed between the pixel array substrate and the color filter substrate. The color filter substrate includes a second substrate, a common electrode layer and a color filter layer. The common electrode layer is disposed between the pixel electrodes and the second substrate, and is spaced from the pixel electrodes. The color filter layer is disposed between the second substrate and the common electrode layer.

In conclusion, In the LCD panel and the pixel array substrate thereof according to the present invention, the transparent conductive layer and the pixel electrode are uded to form a storage capacitor, so as to improve the aperture ratio of the high-resolution LCD panel. Furthermore, a capacity coupling effect on the pixel electrodes generated by components (the data lines, gate lines, thin film transistors, or a combination thereof), below the transparent conductive layer may also be prevented through the transparent conductive layer.

**BRIEF DESCRIPTION OF THE DRAWINGS**

The present invention will become more fully understood from the detailed description given herein below for illustration only, and thus not limitative of the present invention, wherein:

FIG. 1A is a top view of a pixel array substrate according to a first example useful for understanding the present invention;

FIG. 1B is a schematic exploded view of the pixel array substrate shown in FIG. 1A;

FIG. 1C is a sectional view along a line I-I of the pixel array substrate shown in FIG. 1A;

FIG. 2A is a schematic exploded view of a pixel array substrate according to a second example useful for understanding the present invention;

FIG. 2B is a schematic exploded view of a pixel array substrate according to a third example useful for understanding the present invention;

FIG. 2C is a schematic exploded view of a pixel array substrate according to a fourth example useful for understanding the present invention;

FIG. 2D is a schematic exploded view of a pixel array substrate according to a fifth example useful for understanding the present invention;

FIG. 3 is a top view of a pixel array substrate according to a first embodiment of the present invention;

FIG. 4 is a sectional view along a line II-II of the pixel array substrate shown in FIG. 3;

FIG. 5 is a top view of a pixel array substrate according to a second embodiment of the present invention;

FIG. 6 is a top view of a pixel array substrate according to an third embodiment of the present invention;

FIG. 7 is a top view of a pixel array substrate according to a fourth embodiment of the present invention;

FIG. 8 is a top view of a pixel array substrate according to a fifth embodiment of the present invention;

FIG. 9 is a local sectional view of an LCD panel according to a first embodiment of the present invention; and

FIG. 10 is a local sectional view of an LCD panel according to a second embodiment of the present invention.

**DETAILED DESCRIPTION**

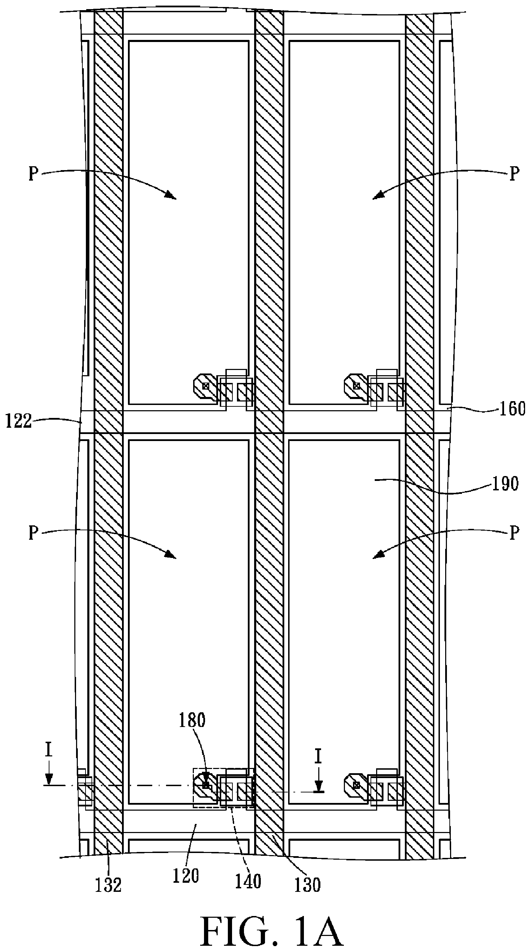

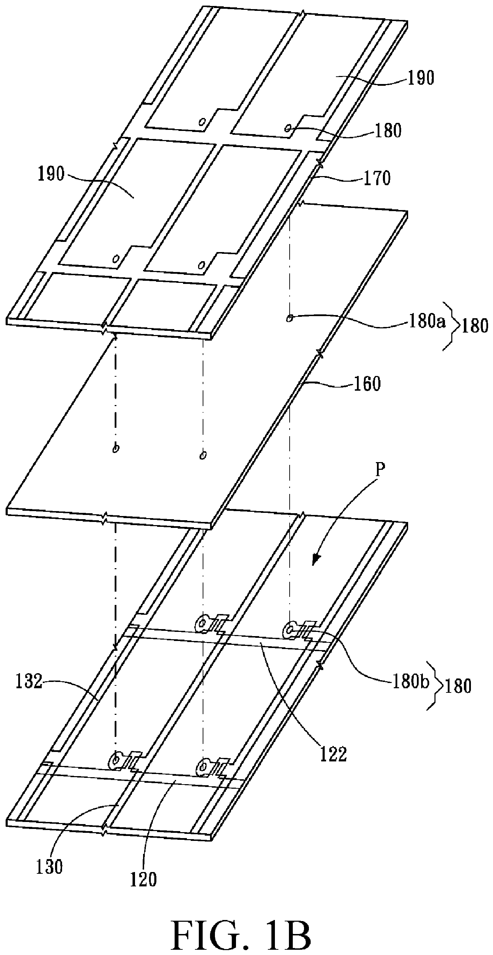

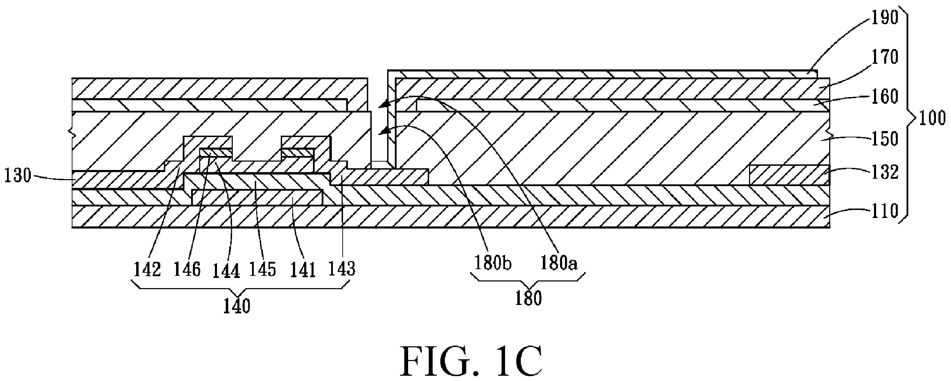

FIG. 1A is a top view of a pixel array substrate according to a first example useful for understanding the present invention. FIG. 1B is a schematic exploded view of the pixel array substrate shown in FIG. 1A. FIG. 1C is a sectional view along a line I-I of the pixel array substrate shown in FIG. 1A. For the convenience of description, insulation layers are omitted in the pixel array substrate shown in FIG. 1A.

Please refer to FIG. 1A, FIG. 1B and FIG. 1C, in which a pixel array substrate 100 includes a first substrate 110, a plurality of gate lines 120 and 122, a plurality of data lines 130 and 132, a plurality of thin film transistors 140, a first insulation layer 150, a transparent conductive layer 160, a second insulation layer 170, a plurality of contact holes 180 and a plurality of pixel electrodes 190.

The gate lines 120 and 122 and the data line130 and 132 are disposed on the first substrate 110. The data lines 130 and 132 and the gate lines 120 and 122 are interlaced. Furthermore, a pixel area P is defined between the gate lines 120 and 122 and the data lines 130 and 132. In other words, the gate line 120, the gate line 122, the data line 130 and the data line 132 encircle a pixel area P.

The thin film transistors 140 respectively correspond to the pixel areas P and are disposed on the first substrate 110. In other words, one thin film transistor 140 may be disposed on each pixel area P. Each thin film transistor 140 has a first terminal 141, a second terminal 142, and a third terminal 143. The first terminal 141 of the thin film transistor 140 is coupled to the gate line 120, and the second terminal 142 of the thin film transistor 140 is coupled to the data line 130. The first terminal 141, the second terminal 142, and the third terminal 143 may be a gate, a drain, and a source respectively.

The first insulation layer 150 covers the gate lines 120 and 122, the data line130 and 132, the thin film transistors 140, and the pixel areas P. The transparent conductive layer 160 covers the first insulation layer 150. Thereby, the transparent conductive layer 160 is used to provide a common voltage level. In other words, a common voltage is applied to the transparent conductive layer 160, so that the transparent conductive layer 160 has a common voltage level.

The second insulation layer 170 covers the transparent conductive layer 160, and the pixel electrodes 190 are corresponding to the pixel areas P and disposed on the second insulation layer 170. In other words, the second insulation layer 170 is disposed between the transparent conductive layer 160 and the pixel electrodes 190, and insulates the transparent conductive layer 160 from the pixel electrodes 190.

The contact hole 180 corresponds to the third terminal 143 of the thin film transistor 140 and penetrates the second insulation layer 170, the transparent conductive layer 160, and the first insulation layer 150, so as to expose the third terminal 143 of the thin film transistor 140. The pixel electrode 190 extends along with an inner wall of the contact hole 180, and directly contacts the third terminal 143 of the thin film transistor 140. In other words, the pixel electrode 190 is coupled electrically to the third terminal 143 (for example, the source) of the corresponding thin film transistor 140 through the corresponding contact hole 180.

The first substrate 110 may be a transparent substrate. The first insulation layer 150 may be of a transparent material or a translucent material. The second insulation layer 170 may be of a transparent material or a translucent material. The transmittance of the transparent material may be 60% to 99%. The transmittance of the translucent material may be 10% to 60%. In addition, the translucent material may be a colored material, for example, a red, a blue or a green material.

In some embodiments, the gate lines 130 and 132 are arranged on the first substrate 110 in a traverse manner; the data lines 120 and 122 are arranged on the first substrate 110 in a longitudinal manner.

For example, the gate lines 120 and 122 may be configured on the first substrate 110 along a first direction in a parallel manner and spaced from each other. The data lines 130 and 132 may be configured on the first substrate 110 along a second direction in a parallel manner and spaced from each other. The first direction is approximately perpendicular to the second direction.

The thin film transistors 140 are respectively corresponding to the pixel areas P. In other words, one thin film transistor 140 may be disposed on each pixel area P. Each thin film transistor 140 has a first terminal 141, a second terminal 142, and a third terminal 143. The first terminal 141, the second terminal 142, and the third terminal 143 may be a gate, a source, and a drain respectively.

In some embodiments, generally, the first terminal 141 of the thin film transistor 140 and the gate lines 120 and 122 may be formed through the same lithographic process. Generally speaking, the first terminal 141 of the thin film transistor 140 and the gate lines 120 and 122 refer to a first metal layer (M1).

In some embodiments, the first terminal 141 of the thin film transistor 140 may be a part of the gate line 120 directly. In other words, the first metal layer (M1) may include a plurality of metal lines used as the gate lines, and the first terminal of the thin film transistor may be a local block of the metal line.

In other embodiments, the first terminal 141 of the thin film transistor 140 may also be a metal block extending from the gate line 120. In other words, the first metal layer (M1) may include a plurality of metal lines used as the gate lines and a plurality of metal blocks used as the first terminals of the thin film transistors. Each metal block extends from a metal line.

In some embodiments, generally the second terminal 142 of the thin film transistor 140, the third terminal 143 of the thin film transistor 140, and the data lines 130 and 132 may be formed through the same lithographic process. Generally speaking, the second terminal 142 of the thin film transistor 140, the third terminal 143 of the thin film transistor 140, and the data line 130 and 132 refer to a second metal layer (M2).

In some embodiments, the second terminal 142 of the thin film transistor 140 may be a part of the data line 130 directly. In other words, the second metal layer (M2) may include a plurality of metal lines used as the data lines 130 and 132 and a plurality of first blocks used as the third terminals 143 of the thin film transistors 140. At this time, the second terminal of the thin film transistor may be a local block of the metal line. In other embodiments, the second terminal 142 of the thin film transistor 140 may also be a metal block extending from the data line 130. In other words, the second metal layer (M2) may include a plurality of metal lines used as the data lines 130 and 132, a plurality of first blocks used as the third terminals 143 of the thin film transistors 140, and a plurality of second blocks used as the second terminals 142 of the thin film transistors 140. Each second block extends from a metal line.

In addition, each thin film transistor 140 further has a channel layer 144. The channel layer 144 is disposed between the first terminal 141 and the second terminal 142, and between the first terminal 141 and the third terminal 143. In some embodiments, the channel layer 144 of the thin film transistor 140 may be an island-shaped pattern layer formed through the lithographic process. A material of the channel layer 144 may be semiconductor materials such as amorphous silicon, polysilicon, or metallic oxide, or other proper semiconductor materials. However, the present invention is not limited thereto.

Furthermore, a gate insulation layer 145 is sandwiched between the channel layer 144 and the first terminal 141 (gate). The gate insulation layer 145 covers a surface of the first terminal 141, and insulates the channel layer 144 from the first terminal 141. Furthermore, the gate insulation layer 145 may further cover a surface of the first substrate 110 where the first terminal 141 is disposed. In other words, the gate insulation layer 145 may cover a structure formed by the first substrate 110 and the first metal layer (M1) on the surface of the first substrate 110. A material of the gate insulation layer 145 may be an inorganic material, for example monox (SiOx), silicon nitride (SiNx), silicon oxynitride, other proper dielectric materials, or a combination thereof. However, the present invention is not limited thereto.

An ohm contact layer 146 is sandwiched between the channel layer 144 and the second terminal 142 and between the channel layer 144 and the third terminal 143, so as to improve electric contact between the channel layer 144 and the second terminal 142, and improve electric contact between the channel layer 144 and the third terminal 143. A material of the ohm contact layer 146 may be a semiconductor material such as doped amorphous silicon, polysilicon, metallic oxide or other proper semiconductor materials, or other materials that can improve electric contact between metal and silicon materials.

In some embodiments, the ohm contact layer 146 may be an island-shaped pattern layer covering an entire upper surface of the channel layer 144. In other embodiments, the ohm contact layer 146 may also be a pattern layer covering a surface of the channel layer 144 below the second terminal 142 and the third terminal 143. In other words, the ohm contact layer 146 is formed by two material blocks respectively disposed below the second terminal 142 and the third terminal 143. Furthermore, corresponding to the second terminal 142 and the third terminal 143, the two material blocks are spaced from each other, so as to expose the channel layer 144.

In some embodiments, the first insulation layer 150 is formed on the surface of the gate insulation layer 145 or the first substrate 110, and formed on the surface of the structure presented by the second metal layer (M2) on the surface of the gate insulation layer 145 or the first substrate 110.

The first insulation layer 150 is used as a flat layer or a passivation layer or overcoat layer. A material of the first insulation layer 150 may be an organic material, an inorganic material, or a combination thereof. The thickness of the first insulation layer 150 can be between 0.2~3.0 micro meter and preferably between 0.8~2.7 micro meter.

Each contact hole 180 may include a first through hole 180a and a second through hole 180b in communication with each other. The first through hole 180a penetrates the transparent conductive layer 160. The second through hole 180b penetrates the first insulation layer 150 and directly reaches the surface of the third terminal 143 of the thin film transistor 140. Thereby, a diameter of the first through hole 180a is greater than that of the second through hole 180b.

Furthermore, the second insulation layer 170 extends from a surface of the transparent conductive layer 160 and covers a side wall of the transparent conductive layer 160 in the first through hole 180a, so as to prevent the transparent conductive layer 160 from being exposed in the first through hole 180a.

The second insulation layer 170 is used as a protection and insulating layer. A material of the second insulation layer 170 may be an organic material, an inorganic material, or a combination thereof.

The organic insulation material may be, for example, benzocyclobutene (BCB) or photo acryl, but is not limited thereto. The inorganic insulation material may be, for example, silicon dioxide ($SiO_2$), silicon nitride ($SiN_x$) or other similar inorganic materials, but is not limited thereto.

A material of the transparent conductive layer 160 and a material of the pixel electrode 190 are both transparent conductive materials. However, the transparent conductive layer 160 and the pixel electrode 190 may be of the same material or of different materials. The transparent conductive material may be, for example, indium tin oxid (ITO), indium zinc oxide (IZO), and so on, but is not limited thereto.

The pixel electrodes 190 may be spaced from each other. In some embodiments, the pixel electrode 190 is partially overlapped with at least one of the adjacent gate lines 120 and 122 and the adjacent data lines 130 and 132. In other embodiments, the pixel electrode 190 may be not overlapped with the gate lines 120 and 122 or the data lines 130 and 132 at all.

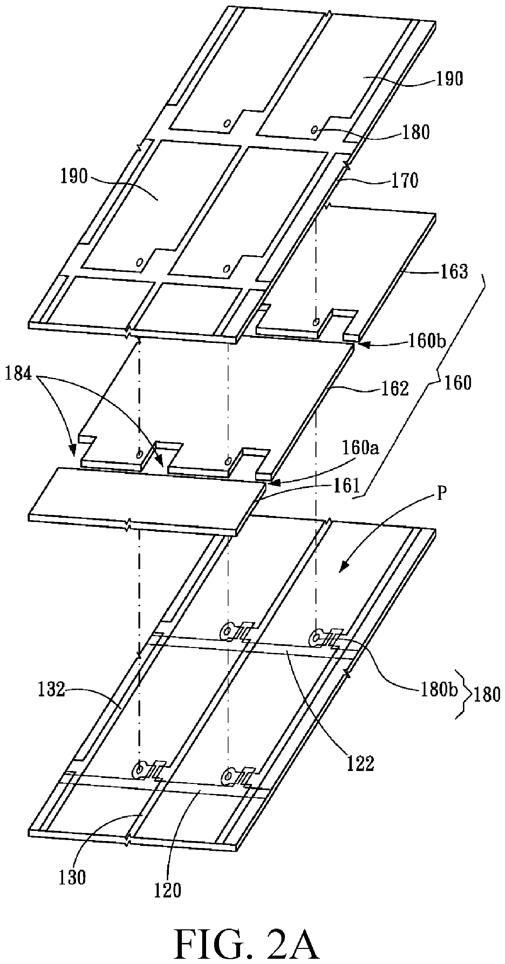

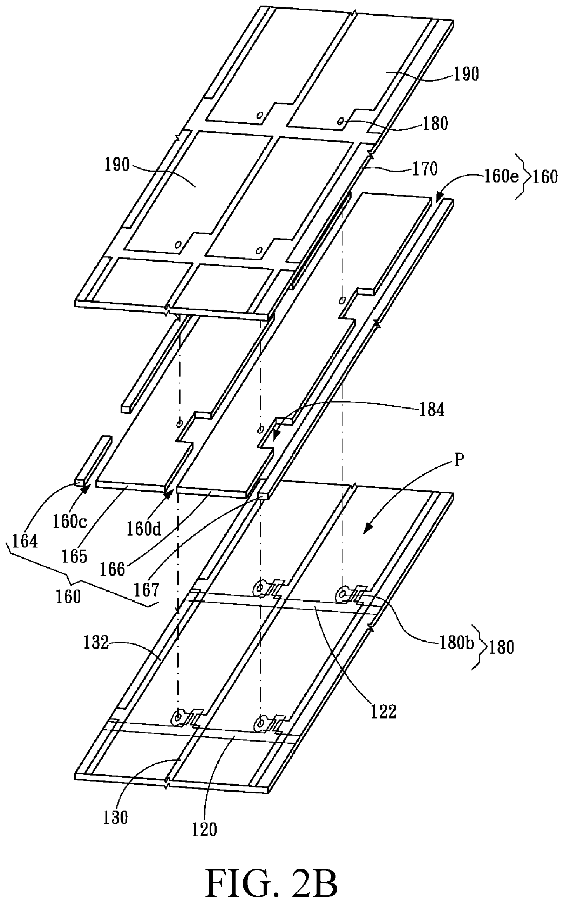

In some embodiments, the transparent conductive layer 160 may be formed on a surface of the first insulation layer 150 and comprehensively cover thereon, as shown in FIG. 1A and FIG. 1B. In other words, the transparent conductive layer 160 is a layer of transparent conductive material, and the layer of transparent conductive material only has the first through holes 180a of the contact holes 180, and has no other openings. The contact holes 180 are all through vias formed in the layer of transparent conductive material. That is, the transparent conductive layer 160 comprehensively covers the gate lines 120, 122, the data lines 130, 132, the pixel areas P and the thin film transistors 140 except areas overlapped with the first through holes 180a of the contact holes 180. In this manner, the transparent conductive layer 160 is used as a shield, so as to prevent the gate lines 120 and 122, the data lines 130 and 132, as well as the thin film transistors 140 from generating a capacity coupling effect on the pixel electrodes 190. FIG. 2A is a schematic exploded view of a pixel array substrate of a second example useful for understanding the present invention. FIG. 2B is a schematic exploded view of a pixel array substrate according to a third example useful for understanding the present invention.

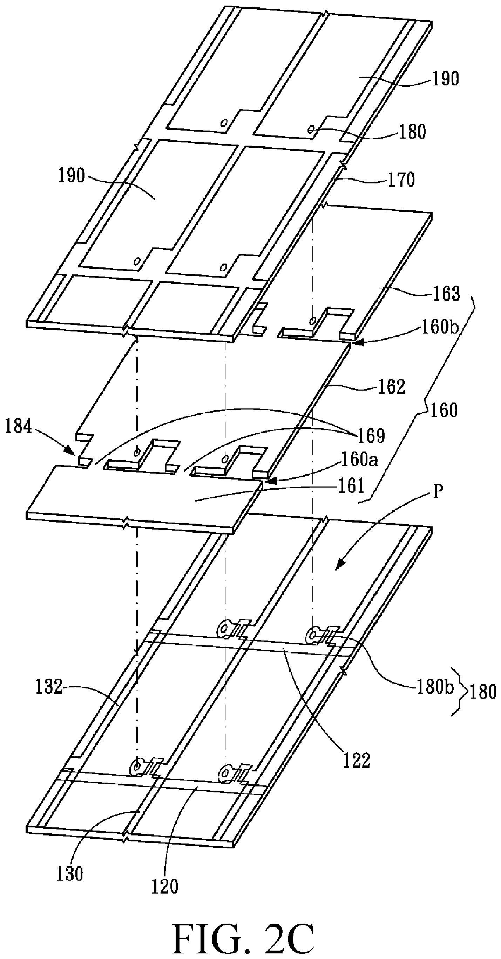

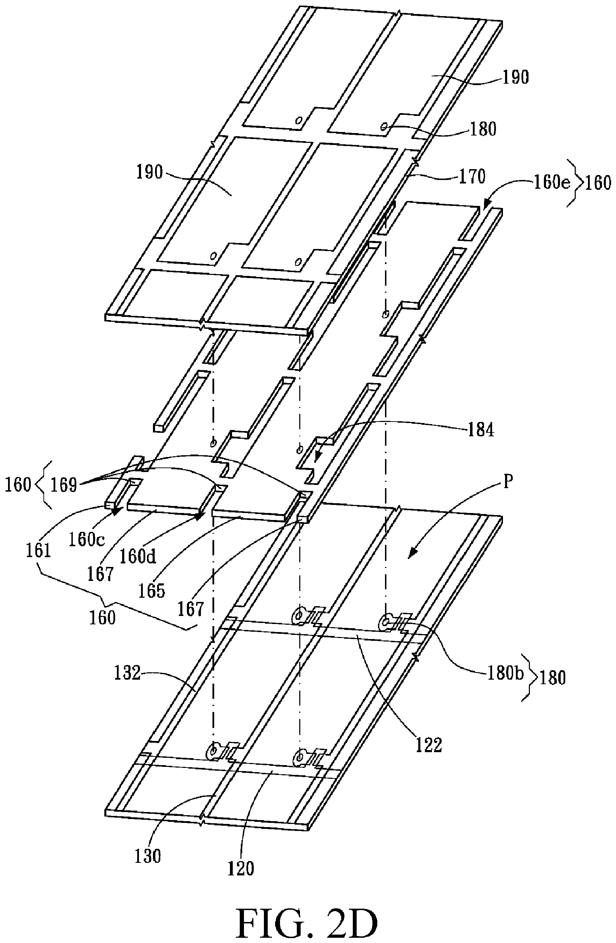

FIG. 2C is a schematic exploded view of a pixel array substrate according to a fourth example useful for understanding the present invention. FIG. 2D is a schematic exploded view of a pixel array substrate according to a fifth example useful for understanding the present invention. Please refer to FIG. 2A, FIG. 2B, FIG. 2C, and FIG. 2D, in which in some embodiments, the transparent conductive layer 160 may include a plurality of material blocks 161 to 163/164 to 167.

Please refer to FIG. 2A and FIG. 2C, in which the material blocks 161 to 163 are spaced from each other, and each material block 161/162/163 extends to cover at least two pixel areas P. In other embodiments, each material block 161/162/163 extends to cover at least two pixel areas P arranged adjacent to each other and cover the data lines 130 and 132 between the pixel areas P.

In some embodiments, a gap is arranged between any two material blocks, so as to separate the material blocks from each other. In other words, the material blocks 161 and 162 are spaced by a gap 160a, and the material blocks 162 and 163 are spaced by a gap 160b.

Furthermore, each gap 160a/160b is overlapped with the gate line 120/122. A width of the gap 160a/160b may be greater than or equal to that of the overlapped gate line 120/122.

Please refer to FIG. 2B and FIG. 2D, in which the material blocks 164 to 167 are spaced from each other, and each material block 164/165/166/167 extends to cover at least two pixel areas P. In other words, each material block 164/165/166/167 extends to cover at least two pixel areas P arranged adjacent to each other and cover the gate lines 120 and 122 between the pixel areas P.

In some embodiments, a gap is arranged between any two material blocks, so as to separate the material blocks from each other. In other words, the material blocks 164 and 165 are spaced by a gap 160c, the material blocks 165 and 166 are spaced by a gap 160d, and the material blocks 166 and 167 are spaced by a gap 160e.

Furthermore, each gap 160c/160d/160e is overlapped with the data line 130/132. A width of the gap 160c/160d/160e may be greater or smaller than or equal to that of the overlapped data line 130/132.

In some embodiments, one material block extends to cover all pixel areas on the same straight line. In other words, each material block may extend to cover an entire line or column of the pixel areas P and cover the data lines or the gate lines between the pixel areas P.

Please refer to FIG. 2A and FIG. 2C, in which the material blocks 161, 162, and 163 extend to cover all pixel areas P on the same straight line, and cover the data lines 130 and 132 between the pixel areas P.

Please refer to FIG. 2B and FIG. 2D, in which the material blocks 164, 165, 166, and 167 extend to cover all pixel areas P on the same straight line, and cover the gate lines 120 and 122 between the pixel areas P.

In some embodiments, the transparent conductive layer 160 may further include multiple electric connectors 169. Each electric connector electrically connects any two of these material blocks.

Please refer to FIG. 2A and FIG. 2C, in which electric connectors 169 are respectively coupled between the material blocks 161 and 162 and between the material blocks 162 and 163, so that the material block 161 is in electric communication with the material block 162, and the material block 162 is in electric communication with the material block 163.

Please refer to FIG. 2B and FIG. 2D, in which electric connectors 169 are respectively coupled between the material blocks 164 and 165, between the material blocks 165 and 166, and between the material blocks 166 and 167, so that the material block 164 is in electric communication with the material block 165, the material block 165 is in electric communication with the material block 166, and the material block 166 is in electric communication with the material block 167.

The electric connectors 169 respectively cross over the gaps 160a,160b, 160c, 160d, and 160e, so as to couple and enable electric communication between the material blocks 161 and 162 spaced by the gap 160a, the material blocks 162 and 163 spaced by the gap 160b, the material blocks 164 and 165 spaced by the gap 160c, the material blocks 165 and 166 spaced by the gap 160d, and the material blocks 166 and 167 spaced by the gap 160e.

Thereby, the electric connectors 169 and the material blocks 161 to 163/164 to 167 may be formed by the same transparent conductive material.

In some embodiments, the transparent conductive layer 160 and the pixel electrode 190 may form a storage capacitor ($C_{st}$). Furthermore, the storage capacitor ($C_{st}$) has an extremely great capacitance value, so as to reduce a kickback voltage ((Vp) effect imposed by the first terminal 141 of the thin film transistor 140 on the pixel therein, thereby preventing that a kickback value of the common voltage is so great that a proper common voltage cannot be supplied.

The kickback voltage (Vp) has the following relational expression:

$$V_p = (C_{gd}) / (C_{st} + C_{LC} + C_{gd}) * (V_{gH} - V_{gL})$$

$C_{gd}$ denotes a capacitor formed by the first terminal 141 of the thin film transistor 140 and the second terminal 142 of the thin film transistor 140, $C_{LC}$ is a capacitor formed by the pixel electrode 190 and an LC, $V_{gH}$

is a voltage when the first terminal 141 of the thin film transistor140 is connected, and $V_{gL}$ is a voltage when the first terminal 141 of the thin film transistor 140 is disconnected.

In some embodiments, the transparent conductive layer 160 may be used to replace common electrodes (such as the common electrodes disposed in the same layer with the data lines), generally disposed in the pixel array substrate. In other words, by disposing the transparent conductive layer 160, no common electrode line needs to be disposed in the pixel area of the pixel array substrate.

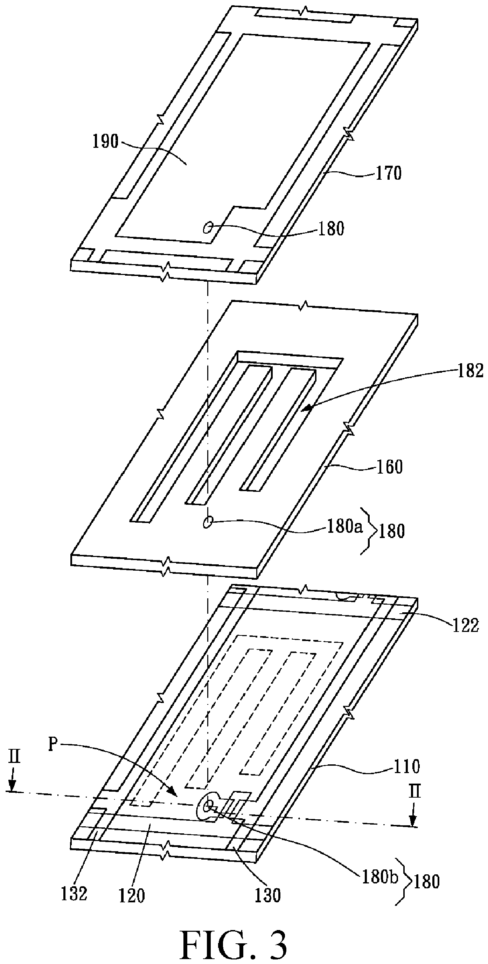

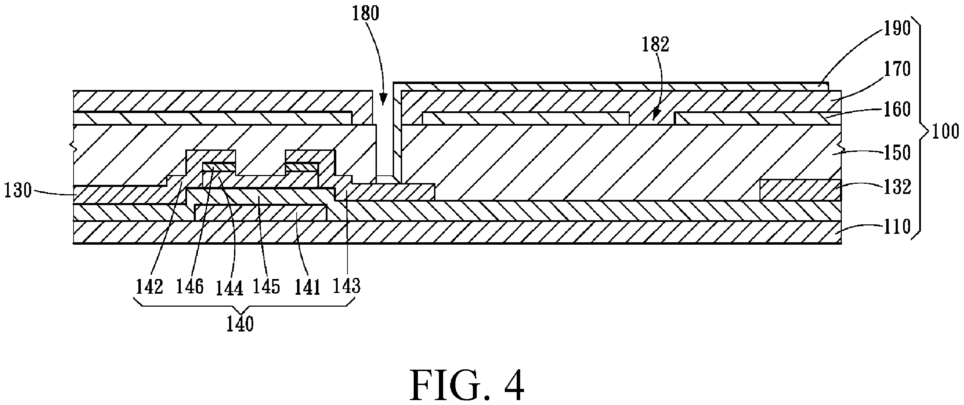

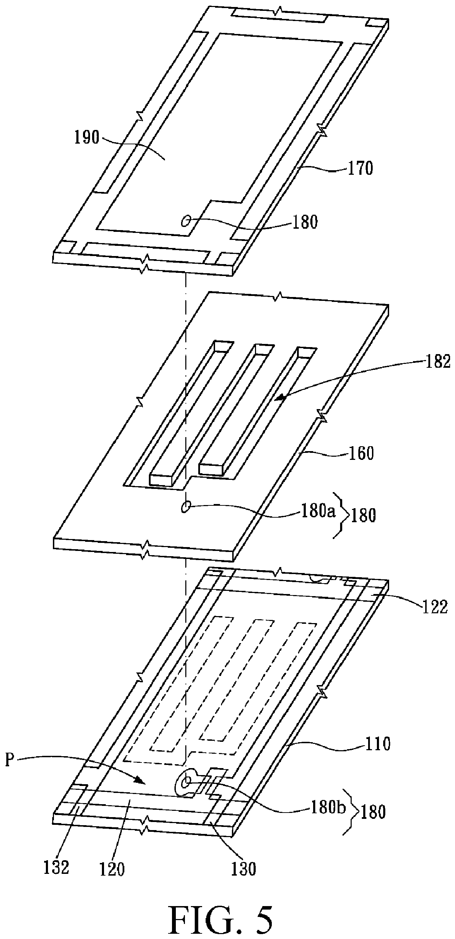

FIG. 3 is a top view of a pixel array substrate according to a first embodiment of the present invention. FIG. 4 is a sectional view along a line II-II of the pixel array substrate shown in FIG. 3. FIG. 5 to FIG. 8 are respectively top views of pixel array substrates according to a second, a third, a fourth and a fifth embodiment of the present invention. For the convenience of description, respective insulation layers in the pixel array substrates shown in FIG. 3, and FIG. 5 to FIG. 8 are omitted. In FIG. 3, and FIG. 5 to FIG. 8, dashed lines drawn on the pixel areas P indicate perpendicular projection positions of openings 182, 183, and 184, namely, positions where the openings 182, 183, and 184 are overlapped after assembly.

Please refer to FIG. 3 to FIG. 8, in which in some embodiments, one or more openings 182, 183, and 184 may be designed on the transparent conductive layer 160. The openings 182, 183, and 184 are disposed between the first insulation layer 150 and the second insulation layer 160, and penetrate the transparent conductive layer 160. Thereby, the openings 182, 183, and 184 can be used to properly adjust the capacitance of the storage capacitor ($C_{st}$) formed by the transparent conductive layer 160 and the pixel electrode 190. Furthermore, through proper configuration, the openings 182, 183, and 184 can further adjust a resistor-capacitor (RC) load relative to the transparent conductive layer 160.

Please refer to FIG. 3 to FIG. 8, in which the opening 182 may be correspondingly disposed in the pixel area P. That is, the opening 182 is disposed in an area encirled by the gate lines 120 and 122 and the data lines 130 and 132, and is not overlapped with the thin film transistor 140.

The number of the opening 182 may be one or more, and the opening 182 is configured into any shape of pattern, for example, an S-shaped pattern, an S-like pattern, an E-shaped pattern, an E-like pattern, a snakelike pattern, a zigzag pattern, a zigzag-like pattern, a comb-shaped pattern, a comb-like pattern, or a pattern of a plurality of strips. However, the present invention is not limited thereto.

Please refer to FIG. 3 and FIG. 4, in which opening 182 may present an E-shaped pattern or an E-like pattern, where the opening of the E is disposed near the gate line 120 that is coupled to the corresponding thin film transistor 40. Please refer to FIG. 5, in which the opening 182 may present an E-shaped pattern or an E-like pattern, where the opening of the E is disposed away from the gate line 120 that is coupled to the corresponding thin film transistor 140.

In other words, the opening 182 of the E-shaped pattern or E-like pattern is formed by a traverse through hole and three longitudinal through holes. Thereby, an extending direction of the traverse through hole is interlaced with an extending direction of the longitudinal through holes. For example, the traverse through hole extends in a direction approximately parallel to the gate lines 120 and 122, while the longitudinal through holes extend in a direction approximately parallel to the data lines 130 and 132. The first terminals of the two longitudinal through holes are respectively in communication with two ends of the traverse through hole, while the first terminal of the remaining longitudinal through hole is in communication with a range between the two ends of the traverse through hole. The three longitudinal through holes may have the same extension length, or have different extension lengths. The traverse through hole may extend along a straight line (as shown in FIG. 3), or extend along a folding line (as shown in FIG. 5). When the traverse through hole extends along the folding line (as shown in FIG. 5), the middle longitudinal through hole may be in communication with a bending position of the traverse through hole. Although the E-shaped pattern with three longitudinal openings is taken as an example for description in FIG. 3 and FIG. 5, in some embodiments, the opening 182 may also have more than three longitudinal through holes, and in this case, the opening 182 is in a comb-shaped pattern.

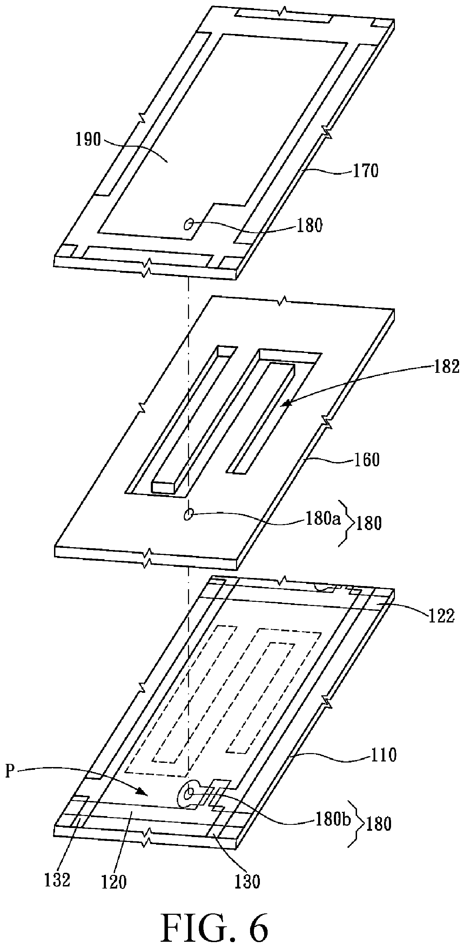

Please refer to FIG. 6, in which the opening 182 may present an S-shaped pattern or an S-like pattern with openings of the S towards the gate lines 120 and 122. However, according to actual requirements, the openings of the S of the opening 182 in the S-shaped pattern or S-like pattern may be towards the data lines 130 and 132, or towards junctions between the data lines 130 and 132 and the gate lines 120 and 122. The opening 182 in the S-shaped pattern or S-like pattern may be made to have a plurality of inflections having an included angle, or have an arc-shaped bend.

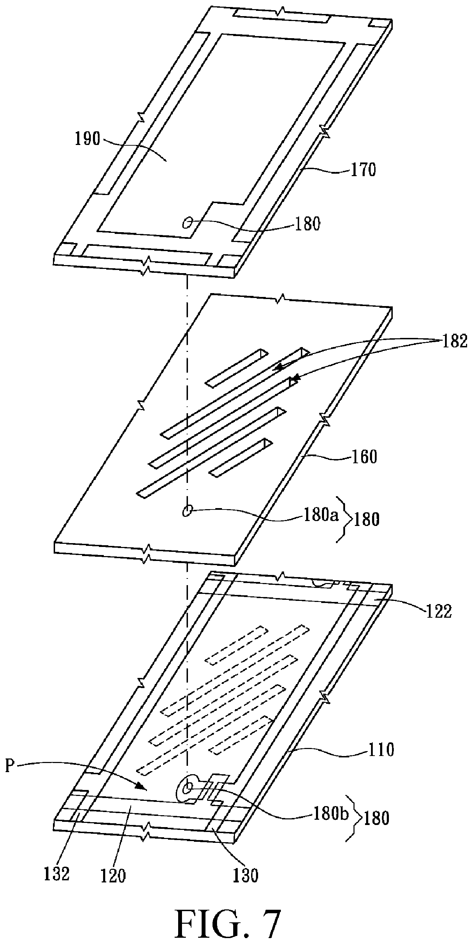

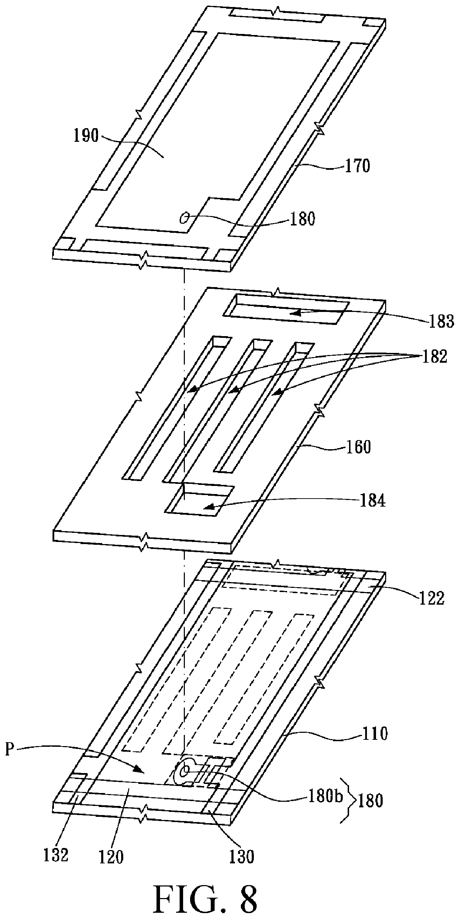

Please refer to FIG. 7 and FIG. 8, in which multiple openings 182 may present a strip pattern. The openings 182 in the strip pattern may be approximately parallel to each other. Furthermore, relative to the extending direction of the gate lines 120 and 122 and the extending direction of the data lines 130 and 132, the openings 182 in the strip pattern may extend slantly, as shown in FIG. 7. The extending direction of the openings 182 in the strip pattern may also be approximately perpendicular to the extending direction of the gate lines 120 and 122, as shown in FIG. 8. However, the extending direction of the openings 182 in the strip pattern may also be designed to be approximately parallel to the extending direction of the gate lines 120 and 122 (not shown).

Please refer to FIG. 8, in which an opening 183 may further be provided on the gate lines 120 and 122 correspondingly. That is, the opening 183 is overlapped with the gate lines 120 and 122. In some embodiments, each opening 183 may completely cover the gate line 120/122 disposed between the two data lines 130 and 132. In some embodiments, each opening 183 may also partially cover the gate line 120/122 disposed between the two data lines 130 and 132.

An opening 184 may further be correspondingly provided on the thin film transistor 140, as shown in FIG. 2A, FIG. 2B, FIG. 2C, FIG. 2D, and FIG. 8. In some embodiments, the opening 184 may completely cover the thin film transistor 140. In other words, a size of the opening 184 is greater than or equal to that of the thin film transistor 140.

In some embodiments, the opening 184 may be merely overlapped with the entire thin film transistor 140, as shown in FIG. 2A and FIG. 2C.

In some embodiments, apart from being overlapped with the entire thin film transistor 140, the opening 184 may further extend to be overlapped with the first through hole 180a of the contact hole 180, as shown in FIG. 8. That is, the opening 184 covers the entire thin film transistor 140 and the first through hole 180a of the contact hole 180. Furthermore, the opening 184 may have a second insulation layer 170, so that the contact hole 180 presents a flat inner wall. In other words, the second insulation layer 170 fills a part of the opening 184.

In some embodiments, apart from being overlapped with the entire thin film transistor 140, the opening 184 may cover a part of the gate line 120/122 at the same time, as shown in FIG. 2B and FIG. 2D.

The size and the number of the openings 182, 183, and 184 may be corresponding to the required capacity of the storage capacitor.

In some embodiments, the size and the number of the openings 182, 183, and 184 may be controlled, so that an overlapping area between the transparent conductive layer 160 and each pixel electrode 190 does not exceed two thirds of the overlapped pixel electrode 190.

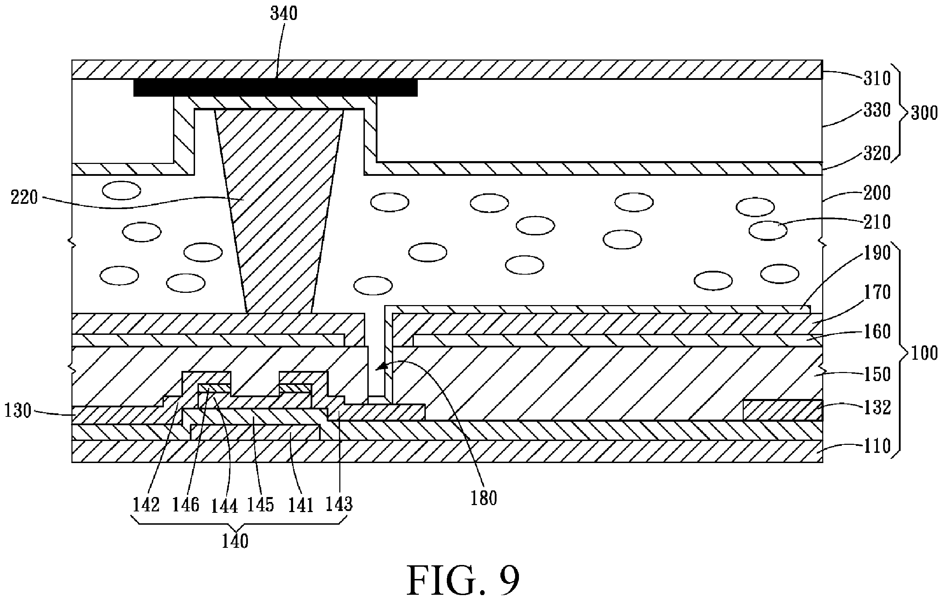

FIG. 9 is a local sectional view of an LCD panel according to a first embodiment of the present invention.

Please refer to FIG. 9, in which the LCD panel includes a pixel array substrate 100, a liquid crystal layer 200 and a color filter substrate 300. The pixel array substrate 100 may be any combination of the foregoing structure designs, which is not described herein again.

The color filter substrate 300 corresponds to the pixel array substrate 100, and is spaced from the pixel array substrate 100. The liquid crystal layer 200 is sandwiched between the pixel array substrate 100 and the color filter substrate 300. Furthermore, a plurality of liquid crystal molecules 210 is suspended in the liquid crystal layer 200.

In some embodiments, a division wall 220 may be disposed to support the color filter substrate 300 on the pixel array substrate 100, so as to form an accommodation space among the division wall 220, the pixel array substrate 100 and the color filter substrate 300. Then the liquid crystal molecules 210 are filled into the accommodation space to form the liquid crystal layer 200.

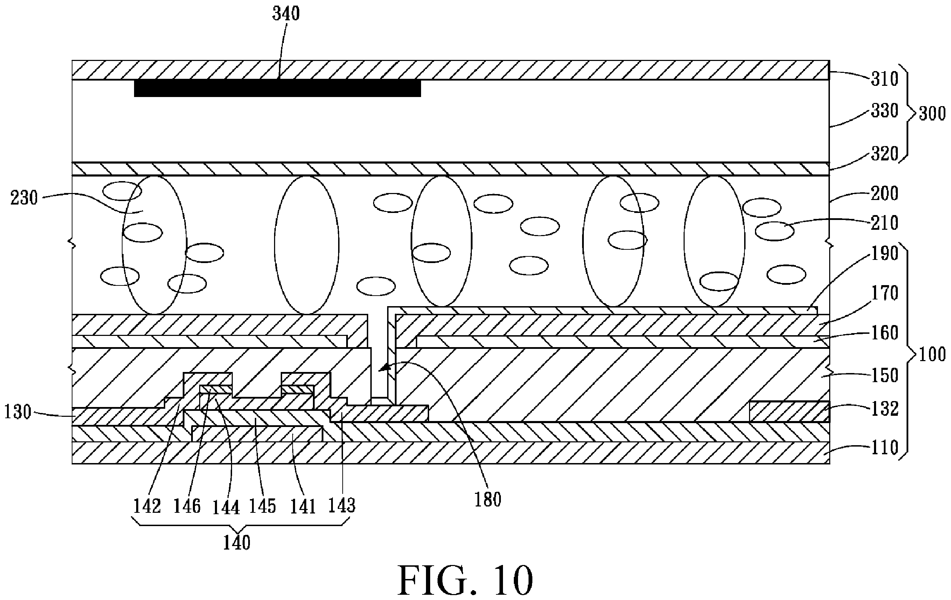

The division wall 220 is formed along with a boundary area of a rectangular pixel area P, so as to define a plurality of pixels of the LCD panel. The division wall 220 may be of an insulation material. Generally, the division wall 20 may be formed through a lithographic process, a print process, an imprint process or a mold. However, the present invention is not limited to the foregoing specific processes. In addition, Please refer to FIG. 10, in which in some embodiments, a spacer ball 230 may replace the division wall 220 to support the pixel array substrate 100 and the color filter substrate 300, but the present invention is not limited thereto.

The color filter substrate 300 includes a second substrate 310, a common electrode layer 320 and a color filter layer 330.

The common electrode layer 320 is disposed between the pixel electrodes 190 and the second substrate 310, and is spaced from the pixel electrodes 190. That is to say, the liquid crystal layer 200 is disposed between the common electrode layer 320 and the pixel electrodes 190.

The color filter layer 330 is disposed between the second substrate 310 and the common electrode layer 320. The common electrode layer 320 may be formed on another surface of the color filter layer 330 opposite the second substrate 310. The color filter layer 330 may include a plurality of color filter blocks, and the color filter blocks are disposed corresponding to the pixel areas P respectively.

The color filter substrate 300 may further include a black matrix layer 340. The black matrix layer 340 is disposed corresponding to gate lines 120 and 122, and data lines 130 and 132, so as to prevent light leak.

In conclusion, in the LCD panel and the pixel array substrate thereof according to the present invention, the transparent conductive layer 160 and the pixel electrode 190 are used to form a storage capacitor, so as to improve the aperture ratio of the high-resolution LCD panel. That is to say, when the present invention is applied to a small sized screen (for example, a screen less than 10 inches), the resolution is improved while the aperture ratio is not sacrificed. Furthermore, a capacity coupling effect on the pixel electrodes 190 generated by components (the data lines 130 and 132, the gate lines 120 and 122, the thin film transistors 140, or a combination thereof) below the transparent conductive layer 160 may also be prevented through the transparent conductive layer 160.

While the present invention has been described by the way of example and in terms of the preferred embodiments, it is to be understood that the invention need not be limited to the disclosed embodiments. On the contrary, it is intended to cover various modifications and similar arrangements included within the scope of the appended claims, the scope of which should be accorded the broadest interpretation so as to encompass all such modifications and similar structures.

**Claims**

1. A liquid crystal display (LCD) panel, comprising:

   a pixel array substrate (100), comprising:

   a first substrate (110);
   a plurality of gate lines (120, 122), disposed on the first substrate (110);
   a plurality of data lines (130, 132), disposed on the first substrate (110) and interlaced with the gate lines (120, 122), wherein a plurality of pixel areas (P) is defined between the data lines (130, 132) and the gate lines (120, 122);
   a plurality of thin film transistors (140), corresponding to the pixel areas (P), respectively, wherein each of the thin film transistors (140) has a first terminal (141) coupled to one of the gate lines (120, 122), a second terminal (142) coupled to one of the data lines (130, 132) and a third terminal (143);
   a first insulation layer (150), covering the data lines (130, 132), the gate lines (120, 122), the pixel areas (P), and the thin film transistors (140);
   a transparent conductive layer (160), covering the first insulation layer (150), for providing a common voltage level;
   a second insulation layer (170);
   a plurality of contact holes (180), corresponding to the thin film transistors (140), respectively, penetrating the second insulation layer (170), the transparent conductive layer (160) and the first insulation layer (150), wherein an end of each contact hole (180) is coupled to the third terminal (143) of the thin film transistor (140); and
   a plurality of pixel electrodes (190), disposed on the second insulation layer (170) corresponding to the pixel areas (P), respectively, each of the pixel electrodes (190) coupled electrically to the third terminal of the corresponding thin film transistor (140) through the corresponding contact hole (180), wherein the second insulation layer (170) is disposed between the transparent conductive layer (160) and the pixel electrodes (190), and insulates the transparent conductive layer (160) from the pixel electrodes (190), the pixel electrodes (190) and the transparent conductive layer form storage capacitors;
   a color filter substrate (300), disposed corresponding to the pixel array substrate (100) and spaced from the pixel array substrate (100), wherein the color filter substrate (300) comprises:

   a second substrate (310);
   a common electrode layer (320), disposed between the pixel electrodes (190) and the second substrate (310), and spaced from the pixel electrodes (190); and
   a color filter layer (330), disposed between the second substrate (310) and the common electrode layer (320); and
   a liquid crystal layer (200), disposed between the pixel array substrate (100) and the color filter substrate (300),
   further comprising at least one opening (182, 183, 184), disposed between the first insulation layer (150) and the second insulation layer (170), and penetrating the transparent conductive layer (160),
   wherein each of the pixel areas (P) has at least one of the openings (182), and wherein the at least one opening (182) disposed in the pixel areas (P) presents an S-shaped pattern, an S-like pattern, an E-shaped pattern, an E-like pattern, a snakelike pattern, a zigzag pattern, a zigzag-like pattern, a comb-shaped pattern, a comb-like pattern, or a pattern of a plurality of strips.

2. The LCD panel according to claim 1, wherein the transparent conductive layer (160) is a layer of transparent conductive material, and the contact holes (180) are all through vias formed in the layer of transparent conductive material.

3. The LCD panel according to claim 1, wherein at least one of the openings (184) is disposed above the thin film transistors (140), respectively.

4. The LCD panel according to claim 1, wherein a plurality of the openings (183) is disposed above the gate lines (120,122), respectively.

5. The LCD panel according to claim 1, wherein an overlapping area between the transparent conductive layer (160) and each of the pixel electrodes (190) is less than or equal to two thirds of the overlapped pixel electrode (190).

6. The LCD panel according to claim 1, wherein a plurality of the openings (184) are disposed above the thin film transistors (140), respectively.

7. The LCD panel according to claim 1, wherein a plurality of the openings (183) are disposed above the gate lines (120,122), respectively.

8. The LCD panel according to claim 1, wherein the transparent conductive layer (160) comprises a plurality of material blocks (161-167) spaced from each other, and each of the material blocks (161-167) extends to cover at least two adjacent pixel areas (P) among the pixel areas (P).

9. The LCD panel according to claim 8, wherein the transparent conductive layer (160) further comprises a plurality of electric connectors (169), and each electric connector (169) electrically connects two of the material blocks (161-167).

10. The LCD panel according to claim 8, wherein each of the material blocks (161-167) extends to cover all pixel areas (P) on the same straight line among the pixel areas (P).

11. The LCD panele according to claim 1, wherein each of the contact holes (180) comprises a first through hole (180a) penetrating the transparent conductive layer (160); and a second through hole (180b) penetratings the first insulation laye (150), and the second insulation layer (170) covers a side wall of the transparent conductive layer (160) in the first through hole (180a).

12. The LCD panel according to claim 11, wherein the transparent conductive layer (160) comprehensively covers the data lines (130, 132), the gate lines (120, 122), the pixel areas (P) and the thin film transistors (140) except areas overlapped with the first through holes (180a).


**Patentansprüche**

1. Flüssigkristallanzeige-Panel (LCD), umfassend:

    ein Pixelarraysubstrat (100), umfassend:

        ein erstes Substrat (110),
        eine Mehrzahl an auf dem ersten Substrat (110) angeordneter Gateleitungen (120, 122),
        eine Mehrzahl an auf dem ersten Substrat (110) angeordneter und mit den Gateleitungen (120, 122) verwobenen Datenleitungen (130, 132), wobei zwischen den Datenleitungen (130, 132) und den Gateleitungen (120, 122) eine Mehrzahl an Pixelbereichen (P) definiert ist,
        eine Mehrzahl an Dünnschichttransistoren (140), die jeweils den Pixelbereichen (P) entsprechen, wobei jeder der Dünnschichttransistoren (140) einen ersten Anschluss (141) aufweist, der mit einer der Gateleitungen (120, 122) gekoppelt ist, einen zweiten Anschluss (142), der mit einer der Datenleitungen (130, 132) gekoppelt ist und einen dritten Anschluss (143),
eine erste Isolationsschicht (150), die die Datenleitungen (130, 132), die Gateleitungen (120, 122), die Pixelbereiche (P) und die Dünnschichttransistoren (140) bedeckt,
eine transparente leitfähige Schicht (160), die die erste Isolationsschicht (150) bedeckt, um ein gemeinsames Spannungsniveau bereitzustellen,
eine zweite Isolationsschicht (170),
eine Mehrzahl von jeweils den Dünnschichttransistoren (140) entsprechenden Kontaktlöchern (180), die jeweils die zweite Isolationsschicht (170), die transparente leitfähige Schicht (160) und die erste Isolationsschicht (150) durchdringen, wobei ein Ende von jedem Kontaktloch (180) mit dem dritten Anschluss (143) des Dünnschichttransistors (140) gekoppelt ist, und
eine Mehrzahl von Pixelelektroden (190), die auf der zweiten Isolationsschicht (170) den Pixelbereichen (P) entsprechend angeordnet sind, jede der Pixelelektroden (190) elektrisch mit dem dritten Anschluss des entsprechenden Dünnschichttransistors (140) durch das entsprechende Kontaktloch (180) gekoppelt ist, wobei die zweite Isolationsschicht (170) zwischen der transparenten leitfähigen Schicht (160) und den Pixelelektroden (190) angeordnet ist und die transparente leitfähige Schicht (160) von den Pixelelektroden (190) isoliert und die Pixelelektroden (190) und die transparente leitfähige Schicht von den Speicherkondensatoren isoliert,
ein Farbfiltersubstrat (300), das dem Pixelarraysubstrat (100) entsprechend angeordnet und von dem Pixelarraysubstrat (100) beabstandet ist, wobei das Farbfiltersubstrat (300) aufweist:

    ein zweites Substrat (310),
    eine gemeinsame Elektrodenschicht (320), die zwischen den Pixelelektroden (190) und dem zweiten Substrat (310) angeordnet ist und von den Pixelelektroden (190) beabstandet ist, und
    eine Farbfilterschicht (330), die zwischen dem zweiten Substrat (310) und der gemeinsamen Elektrodenschicht (320) angeordnet ist, und
    eine Flüssigkristallschicht (200), die zwischen dem Pixelarraysubstrat (100) und dem Farbfiltersubstrat (300) angeordnet ist,

ferner umfassend zumindest eine zwischen der ersten Isolationsschicht (150) und der zweiten Isolationsschicht (170) angeordnete Öffnung (182, 183, 184), die die transparente leitfähige Schicht (160) durchdringt,

wobei jeder der Pixelbereiche (P) mindestens eine der Öffnungen (182) aufweist, und

wobei die mindestens eine in den Pixelbereichen (P) angeordnete Öffnung (182) ein S-förmiges Muster, ein S-ähnliches Muster, ein E-förmiges Muster, ein E-ähnliches Muster, ein schlangenähnliches Muster, ein Zickzackmuster, ein zickzack-ähnliches Muster, ein kammförmiges Muster, ein kamm-ähnliches Muster oder ein Muster aus einer Mehrzahl von Streifen ausbildet.

2. LCD-Panel nach Anspruch 1, wobei die transparente leitfähige Schicht (160) eine Schicht aus transparentem leitfähigem Material ist und die Kontaktlöcher (180) alle Durchgangslöcher sind, die in der Schicht aus transparentem leitfähigem Material ausgebildet sind.

3. LCD-Panel nach Anspruch 1, wobei mindestens eine der Öffnungen (184) jeweils oberhalb der Dünnschichttransistoren (140) angeordnet ist.

4. LCD- Panel nach Anspruch 1, wobei eine Mehrzahl der Öffnungen (183) jeweils oberhalb der Gateleitungen (120, 122) angeordnet ist.

5. LCD-Panel nach Anspruch 1, wobei ein Überlappungsbereich zwischen der transparenten leitfähigen Schicht (160) und jeder der Pixelelektroden (190) kleiner oder gleich zwei Drittel der überlappten Pixelelektrode (190) ist.

6. LCD-Panel nach Anspruch 1, wobei eine Mehrzahl der Öffnungen (184) oberhalb der Dünnschichttransistoren (140) angeordnet sind.

7. LCD-Panel nach Anspruch 1, wobei eine Mehrzahl der Öffnungen (183) jeweils oberhalb der Gateleitungen (120, 122) angeordnet sind.

8. LCD-Panel nach Anspruch 1, wobei die transparente leitfähige Schicht (160) eine Mehrzahl von voneinander beabstandeten Materialblöcken (161-167) umfasst, und jeder der Materialblöcke (161-167) sich erstreckt, um zumindest zwei benachbarte Pixelbereiche (P) von den Pixelbereichen (P) bedeckt.

9. LCD-Panel nach Anspruch 8, wobei die transparente leitfähige Schicht (160) ferner mehrere elektrische Verbinder (169) aufweist und jeder elektrische Verbinder (169) zwei der Materialblöcke (161-167) elektrisch verbindet.

10. LCD-Panel nach Anspruch 8, wobei jeder der Materialblöcke (161-167) sich erstreckt, um alle Pixelbereiche (P) auf derselben geraden Linie von den Pixelbereichen (P) abzudecken.

11. LCD-Panel nach Anspruch 1, wobei jedes der Kontaktlöcher (180) ein erstes die transparente leitfähige Schicht (160) durchdringendes Durchgangsloch (180a) und ein zweites die erste Isolationsschicht (150) durchdringes Durchgangsloch (180b) umfasst und die zweite Isolationsschicht (170) eine Seitenwand der transparenten leitfähigen Schicht (160) im ersten Durchgangsloch (180a) bedeckt.

12. LCD-Panel nach Anspruch 11, wobei die transparente leitfähige Schicht (160) vollständig die Datenleitungen (130, 132), die Gateleitungen (120, 122), die Pixelbereiche (P) und die Dünnschichttransistoren (140) bedeckt, außer Flächen, die die ersten Durchgangslöchern (180a) überlappen.

## Revendications

1. Affichage à cristaux liquides (LCD), comprenant :

un substrat de réseau de pixels (100), qui comprend :

un premier substrat (110) ;
une pluralité de lignes de grilles (120, 122), disposées sur le premier substrat (110) ;
une pluralité de lignes de données (130, 132), disposées sur le premier substrat (110) et entrelacées avec les lignes de grilles (120, 122), dans lequel une pluralité de zones de pixels (P) sont définies entre les lignes de données (130, 132) et les lignes de grilles (120, 122) ;
une pluralité de transistors à couches minces (140), qui correspondent aux zones de pixels (P), respectivement, dans lequel chacun des transistors à couches minces (140) présente une première borne (141) couplée à l'une des lignes de grilles (120, 122), une deuxième borne (142) couplée à l'une des lignes de données (130, 132) et une troisième borne (143) ;
une première couche isolante (150), qui couvre les lignes de données (130, 132), les lignes de grilles (120, 122), les zones de pixels (P), et les transistors à couches minces (140) ;

une couche conductrice transparente (160), qui couvre la première couche isolante (150), destinée à fournir un niveau de tension commun ;

une seconde couche isolante (170) ;

une pluralité de trous de contact (180), qui correspondent aux transistors à couches minces (140), respectivement, qui pénètrent dans la seconde couche isolante (170), dans la couche conductrice transparente (160) et dans la première couche isolante (150), dans lequel une extrémité de chaque trou de contact (180) est couplée à la troisième borne (143) du transistor à couches minces (140) ; et

une pluralité d'électrodes de pixels (190), disposées sur la seconde couche isolante (170) qui correspondent aux zones de pixels (P), respectivement, chacune des électrodes de pixels (190) étant couplée de manière électrique à la troisième borne du transistor à couches minces correspondant (140) par l'intermédiaire du trou de contact (180) correspondant, dans lequel la seconde couche isolante (170) est disposée entre la couche conductrice transparente (160) et les électrodes de pixels (190), et isole la couche conductrice transparente (160) des électrodes de pixels (190), les électrodes de pixels (190) et la couche conductrice transparente formant des condensateurs de stockage ;

un substrat de filtre de couleur (300), disposé de manière correspondante sur le substrat de réseau de pixels (100), et espacé du substrat de réseau de pixels (100), dans lequel le substrat de filtre de couleur (300) comprend :

un second substrat (310) ;

une couche d'électrode commune (320), disposée entre les électrodes de pixels (190) et le second substrat (310), et espacée des électrodes de pixels (190) ; et

une couche de filtre de couleur (330), disposée entre le second substrat (310) et la couche d'électrode commune (320) ; et

une couche de cristaux liquides (200), disposée entre le substrat de réseau de pixels (100) et le substrat de filtre de couleur (300) ;

comprenant en outre au moins une ouverture (182, 183, 184), disposée entre la première couche isolante (150) et la seconde couche isolante (170), et qui pénètre dans la couche conductrice transparente (160) ;

dans lequel chacune des zones de pixels (P) présente au moins l'une des ouvertures (182) ; et

dans lequel la ou les ouvertures (182) disposées dans les zones de pixels (P) présentent un motif en forme de S, un motif similaire à un S, un motif en forme de E, un motif similaire à un E, un motif similaire à une onde, un motif en forme de zigzag, un motif similaire à un zigzag, un motif en forme de peigne, un motif similaire à un peigne, ou un motif qui comprend une pluralité de bandes.

2. Panneau LCD selon la revendication 1, dans lequel la couche conductrice transparente (160) est une couche réalisée dans un matériau conducteur transparent, et les trous de contact (180) sont tous des trous de liaison traversants formés dans la couche réalisée dans un matériau conducteur transparent.

3. Panneau LCD selon la revendication 1, dans lequel l'une au moins des ouvertures (184) est disposée au-dessus des transistors à couches minces (140), respectivement.

4. Panneau LCD selon la revendication 1, dans lequel une pluralité d'ouvertures (183) sont disposées au-dessus des lignes de grilles (120, 122), respectivement.

5. Panneau LCD selon la revendication 1, dans lequel une zone de chevauchement entre la couche conductrice transparente (160) et chacune des électrodes de pixels (190), est inférieure ou égale aux deux tiers de l'électrode de pixel (190) chevauchée.

6. Panneau LCD selon la revendication 1, dans lequel une pluralité d'ouvertures (184) sont disposées au-dessus des transistors à couches minces (140), respectivement.

7. Panneau LCD selon la revendication 1, dans lequel une pluralité d'ouvertures (183) sont disposées au-dessus des lignes de grilles (120, 122), respectivement.

8. Panneau LCD selon la revendication 1, dans lequel la couche conductrice transparente (160) comprend une pluralité de blocs de matériau (161 - 167) espacés les uns des autres, et chacun des blocs de matériau (161 - 167) s'étend de façon à couvrir deux zones de pixels (P) adjacentes au moins parmi les zones de pixels (P).

9. Panneau LCD selon la revendication 8, dans lequel la couche conductrice transparente (160) comprend en outre une pluralité de connecteurs électriques (169), et chaque connecteur électrique (169) connecte de manière électrique deux des blocs de matériau (161 - 167).

**10.** Panneau LCD selon la revendication 8, dans lequel chacun des blocs de matériau (161 - 167) s'étend de façon à couvrir toutes les zones de pixels (P) sur une même ligne droite parmi les zones de pixels (P).

**11.** Panneau LCD selon la revendication 1, dans lequel chacun des trous de contact (180) comprend un premier trou traversant (180a) qui pénètre dans la couche conductrice transparente (160) ; et un second trou traversant (180b) qui pénètre dans la première couche isolante (150), et la seconde couche isolante (170) couvre une paroi latérale de la couche conductrice transparente (160) dans le premier trou traversant (180a).

**12.** Panneau LCD selon la revendication 11, dans lequel la couche conductrice transparente (160) couvre complètement les lignes de données (130, 132), les lignes de grilles (120, 122), les zones de pixels (P) et les transistors à couches minces (140), à l'exception des zones chevauchées par les premiers trous traversants (180a).

## FIG. 1A

FIG. 1B

FIG. 1C

FIG. 2A

# FIG. 2B

FIG. 2C

FIG. 2D

FIG. 3

FIG. 4

EP 2 674 809 B1

FIG. 5

FIG. 6

FIG. 7

FIG. 8

FIG. 9

EP 2 674 809 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0556484 A